# EUROPEAN PATENT APPLICATION

(11) **EP 4 693 741 A1**
(43) Date of publication of application: **11.02.2026**
(21) Application number: 24781172.2
(22) Date of filing: 26.03.2024
(51) Int. Cl.: H01Q 3/08, H01Q 1/12, F16H 19/00, F16H 1/04, F16B 7/18

(54) **ANTENNA DEVICE**

(30) Priority: 28.03.2023 KR 20230040172; 25.03.2024 KR 20240040461
(71) Applicant: KMW Inc., Hwaseong-si, Gyeonggi-do 18462 (KR)
(72) Inventor: KIM, Duk Yong, Yongin-si Gyeonggi-do 17086 (KR); YOO, Chang Woo, Hwaseong-si Gyeonggi-do 18378 (KR); LEE, Myong Sik, Suwon-si Gyeonggi-do 16698 (KR); LEE, Joo Hoon, Anyang-si Gyeonggi-do 14102 (KR); RYU, Chi Back, Hwaseong-si Gyeonggi-do 18392 (KR); PARK, Dae Myung, Hwaseong-si Gyeonggi-do 18443 (KR); KIM, Hee, Osan-si Gyeonggi-do 18131 (KR); CHOI, Jae Woo, Osan-si Gyeonggi-do 18111 (KR); LEE, Woo Kyung, Gwangmyeong-si Gyeonggi-do 14345 (KR); CHOI, In Hwa, Yongin-si Gyeonggi-do 17148 (KR)
(74) Representative: impuls legal PartG mbB
(86) International application number: PCT/KR2024/003747
(87) International publication number: WO 2024/205181

(57) **Abstract**

Provided is an antenna device that can facilitate smooth operation of a rotation driving unit due a simplified structure and consequent reduction in weight. To this end, the antenna device according to the present invention comprises: an antenna unit; a support mounting unit that attaches to a support; and a rotation driving unit that attaches to the support mounting unit to allow rotating in the horizontal direction, and when rotated so, that rotates the antenna unit in the horizontal direction, wherein the support mounting unit is provided with an internal gear and the rotation driving unit is provided with an external gear, the external gear engaging with the internal gear when the rotation driving unit is in operation to rotate and move along the inner circumferential surface of the internal gear, thus rotating the rotation driving unit in the horizontal direction.

## Description

### [Technical Field]

The present disclosure relates to an antenna apparatus, and more particularly, to a multi-input and output antenna apparatus which is used in a wireless communication technology, such as a mobile communication terminal.

### [Background Art]

A wireless communication technology, for example, a multiple-input multiple-output (MIMO) technology is a technology that significantly increases a data transmission capacity by using multiple antennas, and is a spatial multiplexing scheme in which a transmitter transmits different data through respective transmission antennas and a receiver distinguishes between transmission data through proper signal processing.

Accordingly, by increasing both the numbers of transmission and reception antenna units, more data can be transmitted because a channel capacity is increased. For example, if the number of antennas is increased to 10, about 10 times the channel capacity can be secured by using the same frequency band compared to a current single antenna system.

In 4G LTE-advanced, up to 8 antennas are used. In the pre-5G stage, a product on which 64 or 128 antennas are mounted has been developed. As the wireless communication technology is advanced, it is expected that base station equipment having far more antennas will be used, which is called a massive MIMO technology. The massive MIMO technology is also called full dimension (FD)-MIMO because the massive MIMO technology enables 3D-beamforming compared to the existing 2-dimension cell operation method.

In the massive MIMO technology, as the number of antennas is increased, the numbers of corresponding transmitters and filters are also increased. Nevertheless, due to the lease cost or spatial restriction of an installation place, there is a need for a compactness and small-sized design for a plurality of layers that constitutes a MIMO antenna in which RF parts (antenna/filter/power amplifier/transceiver etc.) and digital parts are combined as a stack structure in order to maximize installation easiness or space utilization when the MIMO antenna is installed in a limited space.

Furthermore, a mobile communication terminal and communication strength may be different depending on the orientation direction of an antenna. The direction of signals that are transmitted and received in an antenna for a base station needs to be changed by adjusting the orientation direction of the antenna in a way to tilt (vertical angle adjustment or up and down angle adjustment) the antenna or rotate (horizontal angle adjustment or left and right angle adjustment) in order to solve a shadow area.

As a technique that tilts and rotates the antenna, among techniques for adjusting the orientation direction of the antenna, Korean Patent Application Publication No. 10-2022-0015959 (February 8, 2022) (hereinafter called "Prior Art 1") discloses "Clamping apparatus for antenna".

Prior Art 1 discloses that the clamping apparatus includes a tilting bracket that is connected to an antenna and that supports the antenna, a base bracket installed in a support pole and disposed to protrude toward the antenna, an integrated housing with which the tilting bracket is rotatably combined up and down that is rotatably combined with the base bracket in a horizontal direction, a tilting driving unit that rotates the tilting bracket up and down, and a rotation driving unit that rotates the integrated housing in the horizontal direction and the tilting driving unit and the rotation driving unit are disposed within the integrated housing.

However, Prior Art 1 has problems in that a structure becomes complicated and weight is also increased because a plurality of worm gears and a plurality of worm wheel gears that constitute the tilting driving unit and the rotation driving unit need to be disposed within the integrated housing.

Furthermore, as a technique that tilts the antenna, among techniques for adjusting the orientation direction of the antenna, U.S. Patent Application Publication No. US 10511090 B2 (December 17, 2019) (hereinafter called "Prior Art 2") discloses "Wireless telecommunication antenna mount and control system".

Prior Art 2 is an antenna mount that is used along with a communication antenna having at least one AISG antenna control unit (ACU). The antenna mount includes a structure interface mounted on an installation structure, an antenna interface that is mounted on an antenna and rotatably connected to the structure interface through a pivot having a vertical axis and that is rotatably movable with respect to the vertical axis through the range of an azimuth location, and a mount azimuth control unit (MACU) including a motor, an AISG-compatible motor controller, a male type bidirectional AISG port, and a female type bidirectional AISG port mechanically connected between the structure interface and the antenna interface and capable of controlling the motor in order to drive a rotatable movement of the antenna that passes through the range of the azimuth location. Both the ACU and the MACU are connected in series to an AISG control interface for serial remote control through the bidirectional AISG port. A mechanical downtilt assembly that is mechanically connected between the antenna interface and the antenna is further constructed in the mount. A lower hinge connector that is connected between a lower part of the antenna interface and a lower part of the antenna is constructed in the mechanical downtilt assembly. The lower hinge connector is rotatable around a horizontal axis. An upper downtilt bracket that is connected between an upper part of the antenna interface and an upper part of the antenna is further constructed in the mechanical downtilt assembly. The upper downtilt bracket is constructed to pivot the antenna with respect to the lower hinge connector through the range of a tilt angle location.

However, the mechanical downtilt assembly of Prior Art 2 is constructed so that a plurality of scissor arms is rotatably combined through a plurality of pivots, and has a problem in that a tilt operation is not smooth due to the weight of the plurality of scissor arms and the plurality of pivots. If the weight of the plurality of scissor arms and the plurality of pivots is forcedly reduced, there may be a problem in that sufficient stiffness for supporting the antenna cannot be secured.

### [DISCLOSURE]

### [Technical Problem]

A technical object of the present disclosure is to provide an antenna apparatus capable of making a smooth operation of a rotation driving unit that rotates an antenna unit by reducing weight by simplifying the structure of the rotation driving unit.

Another technical object of the present disclosure is to provide an antenna apparatus capable of making a smooth operation of a tilt driving unit by sufficiently securing stiffness while reducing the weight of the tilt driving unit that tilts the antenna unit.

Still another technical object of the present disclosure is to provide an antenna apparatus capable of manually tilting or automatically tilting the antenna unit.

Technical objects of the present disclosure are not limited to the aforementioned objects, and the other objects not described above may be evidently understood from the following description by those skilled in the art.

### [Technical Solution]

In order to achieve the objects, an antenna apparatus according to the present disclosure includes an antenna unit, a support pole mounting unit, and a rotation driving unit. The support pole mounting unit is combined with a support pole. The rotation driving unit is rotatably combined with the support pole mounting unit in a horizontal direction, and rotates the antenna unit in the horizontal direction when being rotated in the horizontal direction. An internal gear is formed in the support pole mounting unit. An external gear is formed in the rotation driving unit. The external gear is geared with the internal gear, and is moved along the inner circumference surface of the internal gear while rotated when the rotation driving unit is driven, thus rotating the rotation driving unit in the horizontal direction.

The internal gear may be formed in an arc shape.

A rotation shaft rotatably combined with the support pole mounting unit may be formed to protrude on upper and lower surfaces of the rotation driving unit.

The antenna apparatus according to the present disclosure may further include a tilt driving unit. The tilt driving unit may have a plurality of tilt members and a plurality of joint bars. The plurality of tilt members may tilt the antenna unit upon rotation. The plurality of joint bars may each rotatably combine both ends of each of the plurality of tilt members. The rotation driving unit may be combined with at least one of the plurality of tilt members.

The plurality of joint bars may each be formed in a pipe shape having an empty inside.

At least one bush may be combined with both ends of the plurality of tilt members. The plurality of joint bars may be rotatably combined with the at least one bush.

The plurality of tilt members may be formed in a pipe shape having an empty inside.

Both ends of the plurality of joint bars may be combined with the plurality of tilt members by a plurality of fixing fastening members, respectively.

Clip through holes may be formed at both ends of each of the plurality of joint bars. The plurality of fixing fastening members may be formed of a plurality of clips. The plurality of clips may penetrate the clip through holes formed at both ends of each of the plurality of joint bars, respectively. The plurality of clips may combine the plurality of joint bars with the plurality of tilt members, respectively.

Snap ring combination grooves may be formed in the outer circumference surfaces of both ends of each of the plurality of joint bars. The plurality of fixing fastening members may include a plurality of snap rings that is combined with the snap ring combination grooves formed in the outer circumference surfaces of both ends of the plurality of joint bars, respectively. The plurality of snap rings may combine the plurality of joint bars with the plurality of tilt members, respectively.

The plurality of joint bars may include a first joint bar, a second joint bar, a third joint bar, and a fourth joint bar. The second joint bar may be spaced apart forward from the first joint bar. The second joint bar may be disposed in parallel to the first joint bar. The third joint bar may be spaced apart upward or downward between the first joint bar and the second joint bar. The third joint bar may be disposed in parallel to the first joint bar and the second joint bar. The fourth joint bar may be spaced apart in a direction opposite to the direction of the third joint bar between the first joint bar and the second joint bar. The fourth joint bar may be disposed in parallel to the first joint bar, the second joint bar, and the third joint bar.

The plurality of tilt members may include a first tilt member, a second tilt member, a third tilt member, and a fourth tilt member. Both ends of the first tilt member may be rotatably combined with the first joint bar and the third joint bar, respectively. Both ends of the second tilt member may be rotatably combined with the second joint bar and the third joint bar, respectively. Both ends of the third tilt member may be rotatably combined with the first joint bar and the fourth joint bar, respectively. Both ends of the fourth tilt member may be rotatably combined with the second joint bar and the fourth joint bar, respectively.

An antenna mounting unit may be combined with the antenna unit. The rotation driving unit may be combined with a rear surface of the third tilt member. The antenna mounting unit may be combined with a front surface of the fourth tilt member.

The first tilt member may include a (1-1)-th tilt member and a (1-2)-th tilt member. Both ends of the (1-1)-th tilt member may be rotatably combined with one end of the first joint bar and one end of the third joint bar, respectively. Both ends of the (1-2)-th tilt member may be rotatably combined with the other end of the first joint bar and the other end of the third joint bar, respectively. The second tilt member may include a (2-1)-th tilt member and a (2-2)-th tilt member. Both ends of the (2-1)-th tilt member may be rotatably combined with one end of the second joint bar and one end of the third joint bar, respectively. Both ends of the (2-2)-th tilt member may be rotatably combined with the other end of the second joint bar and the other end of the third joint bar, respectively. The third tilt member may include a (3-1)-th tilt member and a (3-2)-th tilt member. Both ends of the (3-1)-th tilt member may be rotatably combined with one end of the first joint bar and one end of the fourth joint bar, respectively. Both ends of the (3-2)-th tilt member may be rotatably combined with the other end of the first joint bar and the other end of the fourth joint bar, respectively. The fourth tilt member may include a (4-1)-th tilt member and a (4-2)-th tilt member. Both ends of the (4-1)-th tilt member may be rotatably combined with one end of the second joint bar and one end of the fourth joint bar, respectively. Both ends of the (4-2)-th tilt member may be rotatably combined with the other end of the second joint bar and the other end of the fourth joint bar, respectively.

Combination plates combined with a rear surface of the (3-1)-th tilt member and a rear surface of the (3-2)-th tilt member, respectively, may be formed on both sides of the rotation driving unit. Combination bars combined with a front surface of the (4-1)-th tilt member and a front surface of the (4-2)-th tilt member may be formed in the antenna mounting unit.

A surface of the rotation driving unit where the rear surface of the (3-1)-th tilt member and the rear surface of the (3-2)-th tilt member faces each other may be formed as a slope. The combination plate may be formed to protrude at a tilt identical to the tilt of the slope at both ends of the slope of the rotation driving unit. A surface of the combination bar where a front surface of the (4-1)-th tilt member and a front surface of the (4-2)-th tilt member faces each other may be formed as a slope.

The combination bar may be formed in a pipe shape having an empty inside.

The tilt driving unit may further include a nut member and a screw bar. The nut member may be disposed in any one of the third joint bar and the fourth joint bar. The screw bar may be vertically fastened to the nut member. The screw bar may be vertically fastened to the nut member. The screw bar may tilt the antenna unit by rotating the first tilt member, the second tilt member, the third tilt member, and the fourth tilt member upon rotation.

A first combination frame having a pipe shape having an empty inside may be disposed in the nut member. A first through hole through which the any one joint bar passes may be formed on both sides of the first combination frame, respectively. Second through holes through which the screw bar passes are formed on upper and lower sides thereof, respectively, may be disposed in the nut member. A third through hole through which the screw bar passes may be formed in the any one joint bar.

The tilt driving unit may further include a mounting bracket and a manual tilt adjustment member. The mounting bracket may be disposed in the other of the third joint bar and the fourth joint bar. The manual tilt adjustment member may be rotatably disposed in the mounting bracket. The manual tilt adjustment member may be combined with one end of the screw bar.

A second combination frame having a pipe shape having an empty inside may be disposed in the mounting bracket. Fourth through holes through which the other joint bar passes may be formed on both sides of the second combination frame, respectively. A fifth through hole through which the screw bar passes may be formed on the lower side of the second combination frame. A sixth through hole through which the manual tilt adjustment member passes may be formed on the upper side of the second combination frame. A seventh through hole through which a combination unit of the screw bar and the manual tilt adjustment member passes may be formed in the other joint bar.

The tilt driving unit may further include a tilt motor. The tilt motor may be mounted on the mounting bracket. A rotation shaft of the tilt motor may be connected to the manual tilt adjustment member and may rotate the screw bar.

The at least one bush may have one side incised, and the incision part may be formed in the at least one bush. At least a part of the at least one bush on the side opposite to the incision part may be welded to each of the plurality of tilt members in an arc shape.

The details of other embodiments are included in the detailed description and drawings.

### [Advantageous Effects]

The antenna apparatus according to the present disclosure has an effect in that an operation of the rotation driving unit is made smooth by reducing weight by simplifying the structure of the rotation driving unit that rotates the antenna unit because the internal gear is formed in the support pole mounting unit, the external gear is formed in the rotation driving unit, and the external gear is geared with the internal gear and moved along the inner circumference surface of the internal gear while rotated when the rotation driving unit is driven and rotates the rotation driving unit in the horizontal direction.

Furthermore, the antenna apparatus according to the present disclosure also has an effect in that an operation of the tilt driving unit can be made smooth by sufficiently securing stiffness while reducing the weight of the tilt driving unit because the plurality of joint bars that constitutes the tilt driving unit that tilts the antenna unit is formed in the pipe shape having an empty inside.

Furthermore, the antenna apparatus according to the present disclosure also has effects in that a worker can manually tilt the antenna unit by rotating the manual tilt adjustment member and the antenna unit can be automatically tilted by an operation of the tilt motor because the rotation shaft of the tilt motor is combined with the manual tilt adjustment member.

Furthermore, the antenna apparatus according to the present disclosure also has effects in that an operation of the tilt driving unit can be made smooth and operation noise can be reduced because at least one bush is combined with each of both ends of the plurality of tilt members and each of the plurality of joint bars is rotatably combined with the at least one bush.

Furthermore, the antenna apparatus according to the present disclosure also has an effect in that a rotation operation of the plurality of tilt members can be smooth because the at least one bush has one side incised, the incision part is formed in the incised part of the bush, at least a part of the at least one bush on the side opposite to the incision part is welded to each of the plurality of tilt members in an arc shape, and the at least one bush is widened on the basis of the incision part upon rotation operation of the plurality of tilt members.

Effects of the present disclosure are not limited to the aforementioned effects, and the other effects not described above may be evidently understood by those skilled in the art from the claims.

### [Description of Drawings]

FIG. 1 is a side view illustrating an antenna apparatus according to an embodiment of the present disclosure.
FIG. 2 is an enlarged view of a tilt driving unit and a rotation driving unit illustrated in FIG. 1.
FIG. 3 is a perspective view of the front side of the tilt driving unit illustrated in FIG. 2.
FIG. 4 is a perspective view of the bottom of the rear side of the tilt driving unit illustrated in FIG. 2.
FIG. 5 is a perspective view of the front side of an antenna mounting unit illustrated in FIG. 2.
FIG. 6 is a perspective view of the rear side of the antenna mounting unit illustrated in FIG. 2.
FIG. 7 is an exploded perspective view illustrating a fourth joint bar and a (3-1)-th tilt member illustrated in FIG. 3.
FIG. 8 is a cross-sectional view in the combined state of FIG. 7.
FIG. 9 is a perspective view illustrating a nut member, a screw bar, and a tilt motor illustrated in FIGS. 3 and 4.
FIG. 10 is a perspective view of the bottom of FIG. 9.
FIG. 11 is an exploded perspective view illustrating an upper part of FIGS. 9 and 10.
FIG. 12 is a perspective view of the bottom of FIG. 11.
FIG. 13 is an exploded perspective view illustrating a lower part of FIGS. 9 and 10.
FIG. 14 is a perspective view of the bottom of FIG. 13.
FIG. 15 is a perspective view of the front side of a rotation driving unit and a support pole mounting unit illustrated in FIG. 2.
FIG. 16 is a perspective view of the bottom of FIG. 15.
FIG. 17 is an exploded perspective view of FIG. 15.
FIG. 18 is a lateral cross-sectional view of FIG. 15.
FIG. 19 is a diagram illustrating another embodiment of the tilt driving unit illustrated in FIG. 3.
FIG. 20 is an exploded view of a fourth snap ring in a fourth joint bar illustrated in FIG. 19.
FIG. 21 is a perspective view illustrating another embodiment of a bush illustrated in FIG. 7.
FIG. 22 is a side view of FIG. 21.

### <Description of Reference Numerals>

100: support pole 200: antenna unit
400: tilt driving unit 411: first joint bar
412: second joint bar 413: third joint bar
413A: third through hole 414: fourth joint bar
414A : seventh through hole 415: clip through hole
417: snap ring combination groove 421: first tilt member
421A: (1-1)-th tilt member 421B: (1-2)-th tilt member
422: second tilt member 422A: (2-1)-th tilt member
422B: (2-2)-th tilt member 423: third tilt member
423A: (3-1)-th tilt member 423B: (3-2)-th tilt member
424: fourth tilt member 424A: (4-1)-th tilt member
424B: (4-2)-th tilt member 425: bush
425A: incision part 430: nut member
435: first combination frame 435A: first through hole
435B: second through hole 440: screw bar
445: manual tilt adjustment member 450: tilt motor
460: mounting bracket 465: second combination frame
465A: fourth through hole 465B: fifth through hole
465C : sixth through hole 500: rotation driving unit
510: rotation shaft 520: slope
525: combination plate 550: external gear
600: antenna mounting unit 615: combination bar
616: slope 700: support pole mounting unit
750: internal gear C1, C2, C3, C4: clip
SR1, SR2, SR3, SR4: snap ring

### [Best Mode]

Hereinafter, an antenna apparatus according to an embodiment of the present disclosure is described with reference to the drawings.

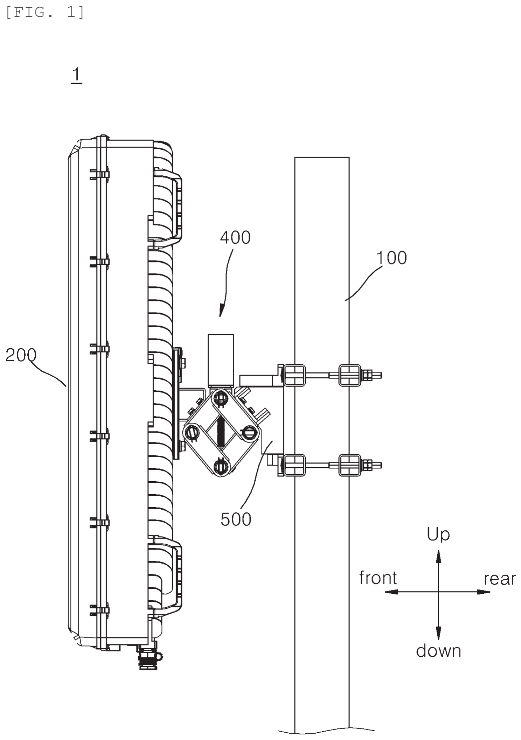

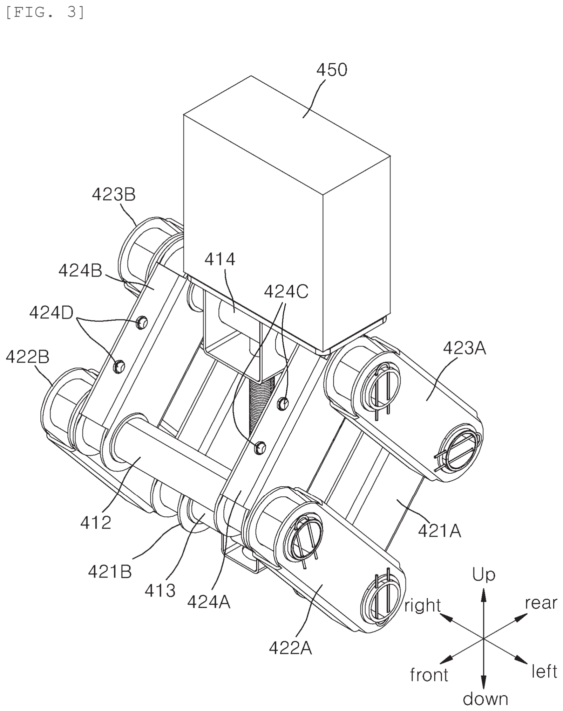

In the description, in terms related to directions, such as front, rear, up, down, left, and right, the directions mean the same directions as front, rear, up, and down indicated in FIG. 1 and front, rear, up, down, left, and right indicated in FIG. 3.

Furthermore, in the description, "tilt" may mean "rotation on the basis of a rotation center that is horizontally disposed", and may mean vertical angle adjustment, up and down angle adjustment, or up and down direction rotation. Furthermore, "rotate" may mean "rotation on the basis of a rotation center that is vertically disposed", and may mean horizontal angle adjustment, left and right angle adjustment, or horizontal direction rotation.

FIG. 1 is a side view illustrating an antenna apparatus according to an embodiment of the present disclosure.

Referring to FIG. 1, an antenna apparatus 1 according to an embodiment of the present disclosure may include a support pole 100, an antenna unit 200, a tilt driving unit 400, and a rotation driving unit 500.

The support pole 100 may be disposed to be spaced apart backward from the antenna unit 200. The support pole 100 may be formed in a long bar shape that is long up and down. The support pole 100 may be formed in a bar shape having a circular cross section. The support pole 100 may be formed in a pipe shape having an empty inside. The support pole 100 may support the components of the antenna apparatus according to an embodiment of the present disclosure except the support pole.

The antenna unit 200 may be disposed to be spaced apart forward from the support pole 100. The antenna unit 200 may be formed in an approximate square barrel shape. A substrate on which antenna elements are mounted may be installed within the antenna unit 200.

The tilt driving unit 400 may be disposed in front of the rotation driving unit 500. The tilt driving unit 400 may rotate the antenna unit 200 up and down. That is, the tilt driving unit 400 may tilt the antenna unit 200.

The rotation driving unit 500 may be disposed in the rear of the tilt driving unit 400. The rotation driving unit 500 may rotate the antenna unit 200 in a horizontal direction. That is, the rotation driving unit 500 may rotate the antenna unit 200.

The tilt driving unit 400 and the rotation driving unit 500 may connect the support pole 100 and the antenna unit 200. The tilt driving unit 400 and the rotation driving unit 500 may be combined.

Detailed structures of the tilt driving unit 400 and the rotation driving unit 500 are described in detail below.

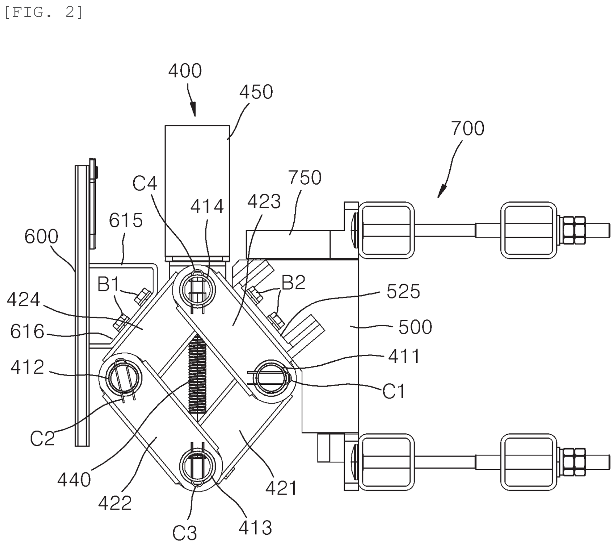

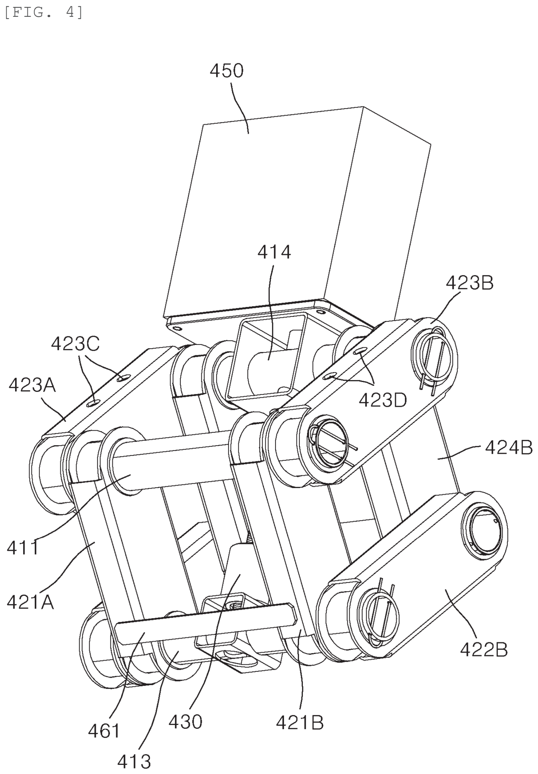

FIG. 2 is an enlarged view of the tilt driving unit and the rotation driving unit illustrated in FIG. 1, FIG. 3 is a perspective view of the front side of the tilt driving unit illustrated in FIG. 2, and FIG. 4 is a perspective view of the bottom of the rear side of the tilt driving unit illustrated in FIG. 2.

Referring to FIGS. 2 to 4, the tilt driving unit 400 may include a plurality of joint bars 411, 412, 413, and 414, a plurality of tilt members 421, 422, 423, and 424 each having both ends rotatably combined with each of the plurality of joint bars 411, 412, 413, and 414, a nut member 430, a screw bar 440, and a tilt motor 450.

The plurality of joint bars 411, 412, 413, and 414 may each rotatably combine both ends of each of the plurality of tilt members 421, 422, 423, and 424. The plurality of joint bars 411, 412, 413, and 414 may include a first joint bar 411, a second joint bar 412 spaced apart forward from the first joint bar 411 and disposed in parallel to the first joint bar 411, a third joint bar 413 spaced apart downward between the first joint bar 411 and the second joint bar 412 and disposed in parallel to the first joint bar 411 and the second joint bar 412, and a fourth joint bar 414 spaced apart upward in a direction opposite to the third joint bar 413 between the first joint bar 411 and the second joint bar 412 and disposed in parallel to the first joint bar 411, the second joint bar 412, and the third joint bar 413.

The plurality of tilt members 421, 422, 423, and 424 may tilt the antenna unit 200 upon rotation. The plurality of tilt members 421, 422, 423, and 424 may include a first tilt member 421 having both ends rotatably combined with the first joint bar 411 and the third joint bar 413, respectively, a second tilt member 422 having both ends rotatably combined with the second joint bar 412 and the third joint bar 413, respectively, a third tilt member 423 having both ends rotatably combined with the first joint bar 411 and the fourth joint bar 414, respectively, and a fourth tilt member 424 having both ends rotatably combined with the second joint bar 412 and the fourth joint bar 414 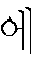 both ends, respectively.

The first tilt member 421 may be disposed to be inclined so that the first tilt member has an upper end close to the rear side thereof and has a lower end close to the front side thereof. The second tilt member 422 may be disposed to be inclined so that the second tilt member has an upper end close to the front side thereof and has a lower end close to the rear side thereof. The third tilt member 423 may be disposed to be inclined so that the third tilt member has an upper end close to the front side thereof and has a lower end close to the rear side thereof. The fourth tilt member 424 may be disposed to be inclined so that the fourth tilt member has an upper end close to the rear side thereof and has a lower end close to the front side thereof.

The nut member 430 may be disposed in the third joint bar 413. In this case, the nut member 430 may be disposed in the fourth joint bar 414. That is, the nut member 430 may be disposed in any one of the third joint bar 413 and the fourth joint bar 414. A mounting bracket 460 that is described later may be disposed in the other of the third joint bar 413 and the fourth joint bar 414.

The screw bar 440 may be lengthily formed up and down. The screw bar 440 may be vertically fastened to the nut member 430, and may tilt the antenna unit 200 by rotating the first tilt member 421, the second tilt member 422, the third tilt member 423, and the fourth tilt member 424 upon rotation.

The tilt motor 450 may be a driving source that rotates the screw bar 440. In the drawings, the tilt motor 450 has been illustrated as being a hexahedron.

A thread may be formed in the inner circumference surface of the nut member 430. A thread that is fastened to the thread formed in the inner circumference surface of the nut member 430 in a screw manner may be formed in the outer circumference surface of the screw bar 440.

The thread forming the inner circumference surface of the nut member 430 and the thread formed in the outer circumference surface of the screw bar 440 may each be formed as a 30 degree (DEG) trapezoid thread.

If each of the thread formed in the inner circumference surface of the nut member 430 and the thread formed in the outer circumference surface of the screw bar 440 is formed as the 30 degree (DEG) trapezoid thread, advantages are as follows. First, an overload of the tilt motor 450 can be prevented because there is no partial load in a thrust direction as an athletic element, the steering ability in a high load condition becomes excellent, and a load transferred to the tilt motor 450 can be reduced. Second, strength to a common involute gear tooth type having a similar size is excellent. Third, self-locking is possible because power transmission is good due to good gearing. Fourth, both an automatic operation through an operation of the tilt motor 450 and a manual operation without the tilt motor 450 are made possible. Fifth, an aluminum structure may be avoided.

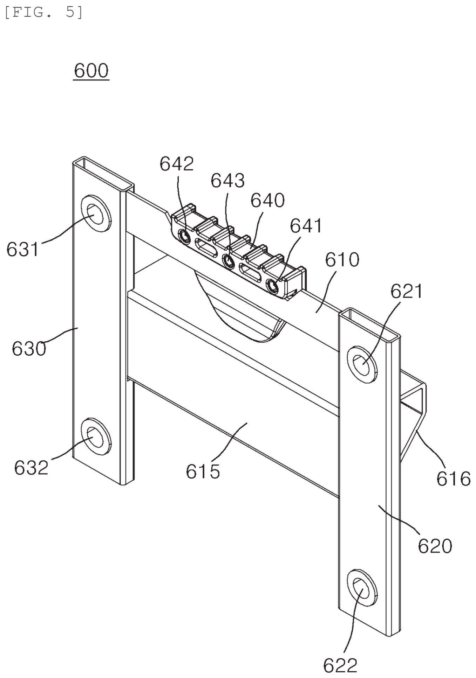

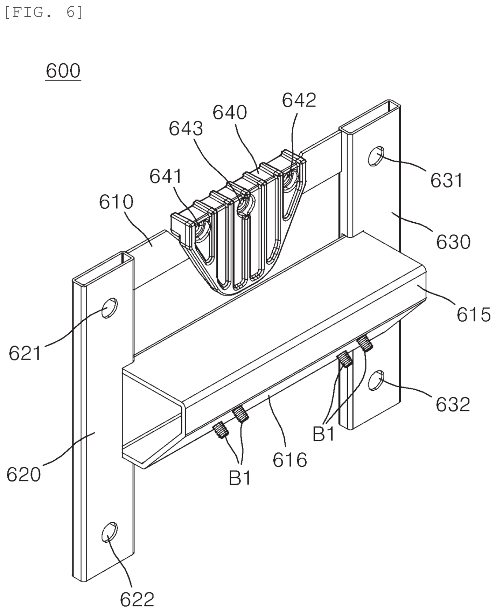

Meanwhile, an antenna mounting unit 600 may be combined with a rear surface of the antenna unit 200. The antenna mounting unit 600 is described in detail below with reference to FIGS. 5 and 6.

FIG. 5 is a perspective view of the front side of the antenna mounting unit illustrated in FIG. 2. FIG. 6 is a perspective view of the rear side of the antenna mounting unit illustrated in FIG. 2.

Referring to FIGS. 5 and 6, the antenna mounting unit 600 may include a horizontal bracket 610 that is lengthily formed in the horizontal direction and a pair of vertical brackets 620 and 630 that is elongated in a vertical direction and that is combined with both left and right ends of the horizontal bracket 610, respectively.

The pair of vertical brackets 620 and 630 may include a left vertical bracket 620 and a right vertical bracket 630. The horizontal bracket 610 may be connected to the upper ends of the pair of vertical brackets 620 and 630. That is, the left end of the horizontal bracket 610 may be welded and combined with the upper end of the left vertical bracket 620. The right end of the horizontal bracket 610 may be welded and combined with the upper end of the right vertical bracket 630.

The antenna mounting unit 600 may be combined with the rear surface of the antenna unit 200 through a plurality of bolts or a plurality of screws. A plurality of fastening holes 621, 622, 631, and 632 that is combined with the rear surface of the antenna unit 200 through the plurality of bolts or the plurality of screws may be formed in the antenna mounting unit 600. Each of the plurality of bolts or each of the plurality of screws may be combined with the rear surface of the antenna unit 200 through each of the plurality of fastening holes 621, 622, 631, and 632.

The plurality of fastening holes 621, 622, 631, and 632 may include a left-upper fastening hole 621 formed at the upper end of the left vertical bracket 620, a left-lower fastening hole 622 formed at the lower end of the left vertical bracket 620, a right-upper fastening hole 631 formed at the upper end of the right vertical bracket 630, and a right-lower fastening hole 632 formed at the lower end of the right vertical bracket 630.

The antenna mounting unit 600 may further include a hook bracket 640. The upper end of the hook bracket 640 may be combined with a central upper end of the horizontal bracket 610. The remaining portions of the hook bracket 640 except the upper end may be disposed on a rear surface of the horizontal bracket 610, and may be disposed to protrude downward from the lower end of the horizontal bracket 610.

A plurality of fastening holes 641, 642, and 643 that is combined with the rear surface of the antenna unit 200 through a plurality of bolts or a plurality of screws may be formed in the upper end of the hook bracket 640. The plurality of bolts or the plurality of screws may be combined with the rear surface of the antenna unit 200 through the plurality of fastening holes 641, 642, and 643, respectively. The plurality of fastening holes 641, 642, and 643 may include a left fastening hole 641 formed at the left part of the hook bracket 640, a right fastening hole 642 formed at the right part of the hook bracket 640, and a central fastening hole 643 formed at the central part of the hook bracket 640.

A combination bar 615 may be disposed lengthily left and right on a rear surface of the antenna mounting unit 600. The combination bar 615 may be disposed to be spaced apart downward from the horizontal bracket 610. The pair of vertical brackets 620 and 630 may be combined with both left and right ends of the combination bar 615, respectively. That is, the left end of the combination bar 615 may be welded and combined with the central part of the left vertical bracket 620. The right end of the combination bar 615 may be welded and combined with the central part of the right vertical bracket 630. The combination bar 615 may be disposed to protrude backward from the pair of vertical brackets 620 and 630.

The combination bar 615 may be combined with a front surface of the fourth tilt member 424. As the combination bar 615 is combined with the front surface of the fourth tilt member 424, the antenna mounting unit 600 may be combined with the front surface of the fourth tilt member 424.

A surface of the combination bar 615 that faces the front surface of the fourth tilt member 424 may be formed to have a slope 616. The slope 616 of the combination bar 615 may be combined with the front surface of the fourth tilt member 424.

The combination bar 615 may be combined with the front surface of the fourth tilt member 424 through a plurality of bolts B1 (refer to FIG. 2). A plurality of bolt fastening holes 424C and 424D (refer to FIG. 3) that is fastened to the plurality of bolts B1 for combining the combination bar 615 with the front surface of the fourth tilt member 424 may be formed in the front surface of the fourth tilt member 424.

The combination bar 615 may be formed in a pipe shape having an empty inside. Operations of the tilt driving unit 400 and the rotation driving unit 500 can be made smooth because the combination bar 615 is formed in the pipe shape having an empty inside and weight is reduced.

Meanwhile, referring to FIGS. 2 to 4, a support pole mounting unit 700 may be combined with the support pole 100. The rotation driving unit 500 may be rotatably combined with the support pole mounting unit 700 in the horizontal direction.

After the first tilt member 421 and the third tilt member 423 are rotatably combined with the first joint bar 411, first clips C1 may be installed at both ends of the first joint bar 411, respectively. The first clips C1 can prevent the first joint bar 411 from being detached from the first tilt member 421 and the third tilt member 423.

After the second tilt member 422 and the fourth tilt member 424 are rotatably combined with the second joint bar 412, second clips C2 may be installed at both ends of the second joint bar 412, respectively. The second clips C2 can prevent the second joint bar 412 from being detached from the second tilt member 422 and the fourth tilt member 424.

After the first tilt member 421 and the second tilt member 422 are rotatably combined with the third joint bar 413, third clips C3 may be installed at both ends of the third joint bar 413, respectively. The third clips C3 can prevent the third joint bar 413 from being detached from the first tilt member 421 and the second tilt member 422.

After the third tilt member 423 and the fourth tilt member 424 are rotatably combined with the fourth joint bar 414, fourth clips C4 may be installed at both ends of the fourth joint bar 414, respectively. The fourth clips C4 can prevent the fourth joint bar 414 from being detached from the third tilt member 423 and the fourth tilt member 424.

The first tilt member 421 may include a (1-1)-th tilt member 421A having both ends rotatably combined with one end of the first joint bar 411 and one end of the third joint bar 413, respectively, and a (1-2)-th tilt member 421B having both ends rotatably combined with the other end of the first joint bar 411 and the other end of the third joint bar 413, respectively.

The (1-1)-th tilt member 421A may be disposed to be inclined so that the (1-1)-th tilt member has an upper end close to the rear side thereof and has a lower end close to the front side thereof. The (1-2)-th tilt member 421B may be disposed to be inclined so that the (1-2)-th tilt member has an upper end close to the rear side thereof and has a lower end close to the front side thereof.

The second tilt member 422 may include a (2-1)-th tilt member 422A having both ends rotatably combined with one end of the second joint bar 412 and one end of the third joint bar 413, respectively, and a (2-2)-th tilt member 422B having both ends rotatably combined with the other end of the second joint bar 412 and the other end of the third joint bar 413, respectively.

The (2-1)-th tilt member 422A may be disposed to be inclined so that the (2-1)-th tilt member has an upper end close to the front side thereof and has a lower end close to the rear side thereof. The (2-2)-th tilt member 422B may be disposed to be inclined so that the (2-2)-th tilt member has an upper end close to the front side thereof and has a lower end close to the rear side thereof.

The third tilt member 423 may include a (3-1)-th tilt member 423A having both ends rotatably combined with one end of the first joint bar 411 and one end of the fourth joint bar 414, respectively, and a (3-2)-th tilt member 423B having both ends rotatably combined with the other end of the first joint bar 411 and the other end of the fourth joint bar 414, respectively.

The (3-1)-th tilt member 423A may be disposed to be inclined so that the (3-1)-th tilt member has an upper end close to the front side thereof and has a lower end close to the rear side thereof. The (3-2)-th tilt member 423B may be disposed to be inclined so that the (3-2)-th tilt member has an upper end close to the front side thereof and has a lower end close to the rear side thereof.

The fourth tilt member 424 may include a (4-1)-th tilt member 424A having both ends rotatably combined with one end of the second joint bar 412 and one end of the fourth joint bar 414, respectively, and a (4-2)-th tilt member 424B having both ends rotatably combined with the other end of the second joint bar 412 and the other end of the fourth joint bar 414, respectively.

The (4-1)-th tilt member 424A may be disposed to be inclined so that the (4-1)-th tilt member has an upper end close to the rear side thereof and has a lower end close to the front side thereof. The (4-2)-th tilt member 424B may be disposed to be inclined so that the (4-2)-th tilt member has an upper end close to the rear side thereof and has a lower end close to the front side thereof.

The plurality of bolt fastening holes 424C (refer to FIG. 3) that is fastened to the plurality of bolts B1 (refer to FIG. 2), respectively, may be formed in the front surface of the (4-1)-th tilt member 424A. The plurality of bolt fastening holes 424C may be formed of a pair of bolt fastening holes 424C that is spaced apart from each other along the length of the (4-1)-th tilt member 424A. Furthermore, the plurality of bolt fastening holes 424D (refer to FIG. 3) that is fastened to the plurality of bolts B1, respectively, may be formed in a front surface of the (4-2)-th tilt member 424B. The plurality of bolt fastening holes 424D may be formed of a pair of bolt fastening holes 424D that is spaced apart from each other along the length of the (4-2)-th tilt member 424B.

A rear surface of the (1-1)-th tilt member 421A and a rear surface of the (1-2)-th tilt member 421B may be connected by a sheet-shaped connection bar 461.

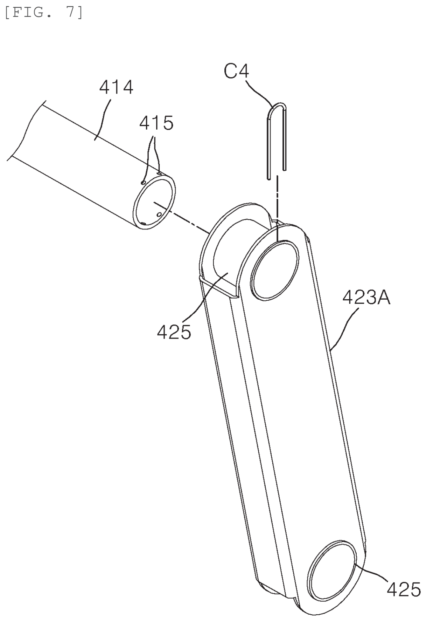

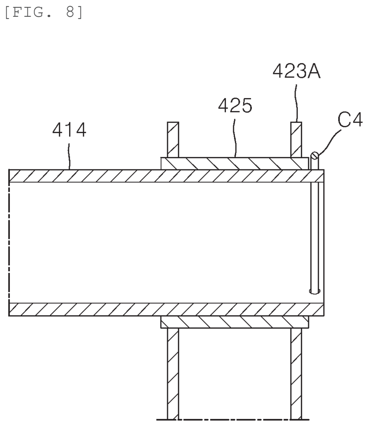

FIG. 7 is an exploded perspective view illustrating the fourth joint bar and the (3-1)-th tilt member illustrated in FIG. 3. FIG. 8 is a cross-sectional view in the combined state of FIG. 7.

Referring to FIGS. 7 and 8, the fourth joint bar 414 may be formed in a pipe shape having an empty inside. Specifically, the fourth joint bar 414 may be formed in a circular pipe shape having an empty inside.

Of course, like the fourth joint bar 414, each of the first joint bar 411, the second joint bar 412, and the third joint bar 413 may be formed in a pipe shape having an empty inside. That is, the plurality of joint bars 411, 412, 413, and 414 may each be formed in the pipe shape having an empty inside. Accordingly, operations of the tilt driving unit 400 and the rotation driving unit 500 can become smooth because the weight of the tilt driving unit 400 is reduced.

Furthermore, the (3-1)-th tilt member 423A may be formed in a pipe shape having an empty inside. Specifically, the (3-1)-th tilt member 423A may be formed in a square pipe shape having an empty inside.

Of course, like the (3-1)-th tilt member 423A, each of the (1-1)-th tilt member 421A, the (1-2)-th tilt member 421B, the (2-1)-th tilt member 422A, the (2-2)-th tilt member 422B, the (3-2)-th tilt member 423B, the (4-1)-th tilt member 424A, and the (4-2)-th tilt member 424B may be formed in a pipe shape having an empty inside. That is, each of the plurality of tilt members 421, 422, 423, and 424 may be formed in the pipe shape having an empty inside. Accordingly, operations of the tilt driving unit 400 and the rotation driving unit 500 can become smooth because the weight of the tilt driving unit 400 is reduced.

Furthermore, bushes 425 may be combined with both ends of the (3-1)-th tilt member 423A, respectively. Of course, as in the (3-1)-th tilt member 423A, the bushes 425 may be combined with both ends of each of the (1-1)-th tilt member 421A, the (1-2)-th tilt member 421B, the (2-1)-th tilt member 422A, the (2-2)-th tilt member 422B, the (3-2)-th tilt member 423B, the (4-1)-th tilt member 424A, and the (4-2)-th tilt member 424B, respectively. That is, the bushes 425 may be combined with both ends of each of the plurality of tilt members 421, 422, 423, and 424, respectively. Each of the plurality of joint bars 411, 412, 413, and 414 may be rotatably combined with the bushes 425, respectively. The circumference of the bush 425 may be welded and combined with each of the plurality of tilt members 421, 422, 423, and 424. The bush 425 makes smooth rotation operations of the plurality of tilt members 421, 422, 423, and 424 when the plurality of tilt members 421, 422, 423, and 424 is rotated and also can reduce rotation noise.

In the drawings, the example in which one bush 425 is combined with each of both ends of each of the plurality of tilt members 421, 422, 423, and 424 has been exemplified. However, a plurality of bushes 425 may be combined with both ends of each of the plurality of tilt members 421, 422, 423, and 424. That is, at least one bush 425 may be combined with both ends of each of the plurality of tilt members 421, 422, 423, and 424. Each of the plurality of joint bars 411, 412, 413, and 414 may be rotatably combined with the at least one bush 425.

If one bush 425 is combined with both ends of each of the plurality of tilt members 421, 422, 423, and 424, rotation operations of the plurality of tilt members 421, 422, 423, and 424 may not be relatively smooth because the tolerance of a space in which the bush 425 is installed is relatively small and a movement of the bush 425 is relatively reduced. If the plurality of bushes 425 is combined with both ends of each of the plurality of tilt members 421, 422, 423, and 424, rotation operations of the plurality of tilt members 421, 422, 423, and 424 may relatively become smooth because the tolerance of the space in which the plurality of bushes 425 is installed is relatively increased and a movement of the plurality of bushes 425 relatively becomes better.

The bush 425 may be installed at both ends of each of the plurality of tilt members 421, 422, 423, and 424 in a plural number in the length direction of each of the plurality of joint bars 411, 412, 413, and 414, and may be installed in a plural number in a way that another bush 425 is inserted into any one bush 425.

Furthermore, a clip through hole 415 may be formed at the end of the fourth joint bar 414. The clip through hole 415 may be formed at both ends of the fourth joint bar 414. The fourth clip C4 may penetrate the clip through hole 415 and combine the fourth joint bar 414 with the (3-1)-th tilt member 423A.

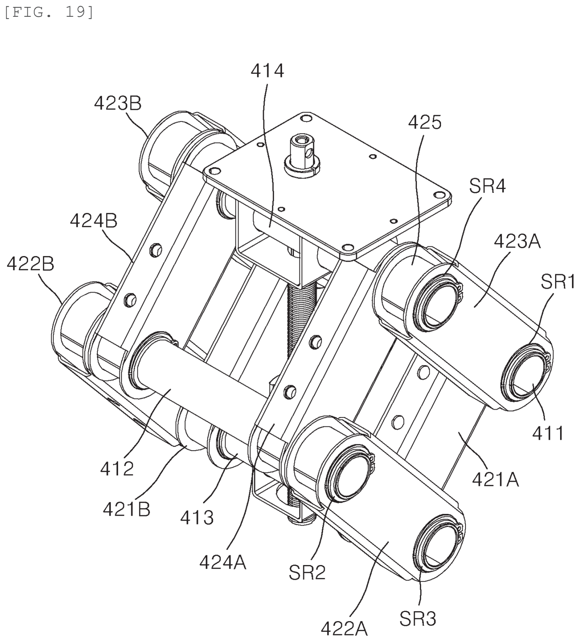

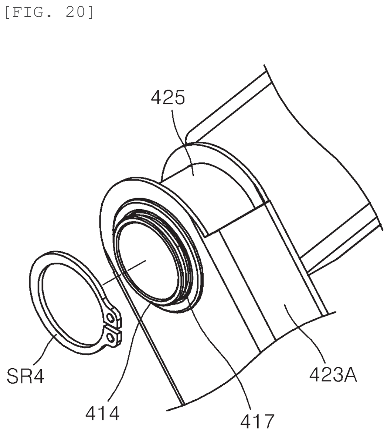

Of course, as in the fourth joint bar 414, the clip through hole 415 may also be formed at both ends of each of the first joint bar 411, the second joint bar 412, and the third joint bar 413. That is, the clip through hole 415 may be formed at both ends of each of the plurality of joint bars 411, 412, 413, and 414. The plurality of clips C1, C2, C3, and C4 (refer to FIG. 2) may combine the plurality of joint bars 411, 412, 413, and 414 with the plurality of tilt members 421, 422, 423, and 424, respectively, through the clip through holes 415 formed at both ends of the plurality of joint bars 411, 412, 413, and 414. In this case, the plurality of clips C1, C2, C3, and C4 may be used as a plurality of fixing fastening members along with a plurality of snap rings SR1, SR2, SR3, and SR4 (refer to FIGS. 19 and 20). That is, the plurality of fixing fastening members may have functions that combine both ends of each of the plurality of joint bars 411, 412, 413, and 414 with the plurality of tilt members 421, 422, 423, and 424.

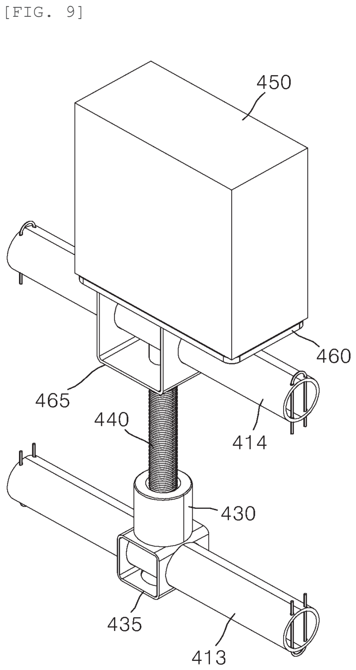

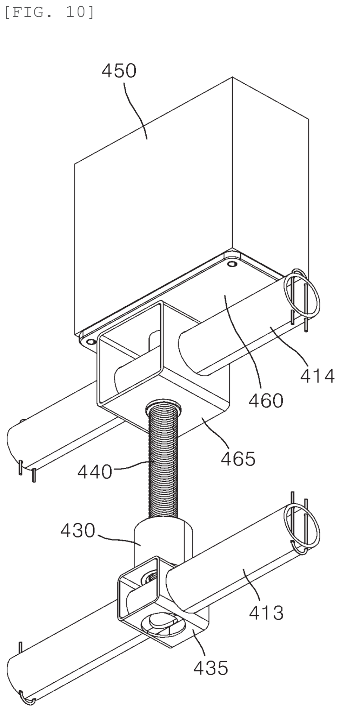

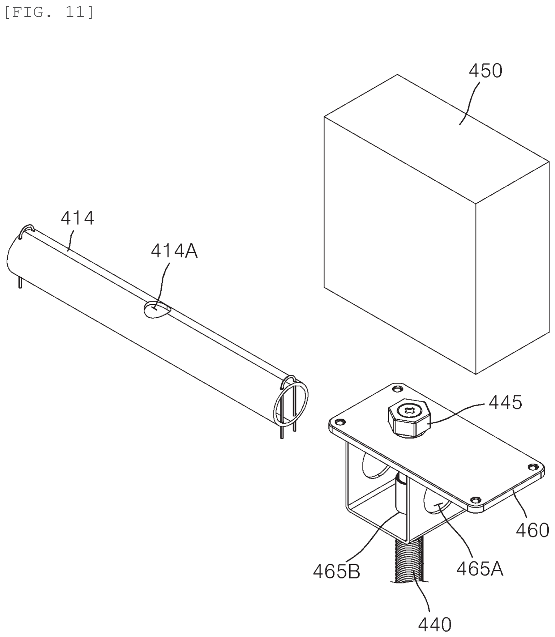

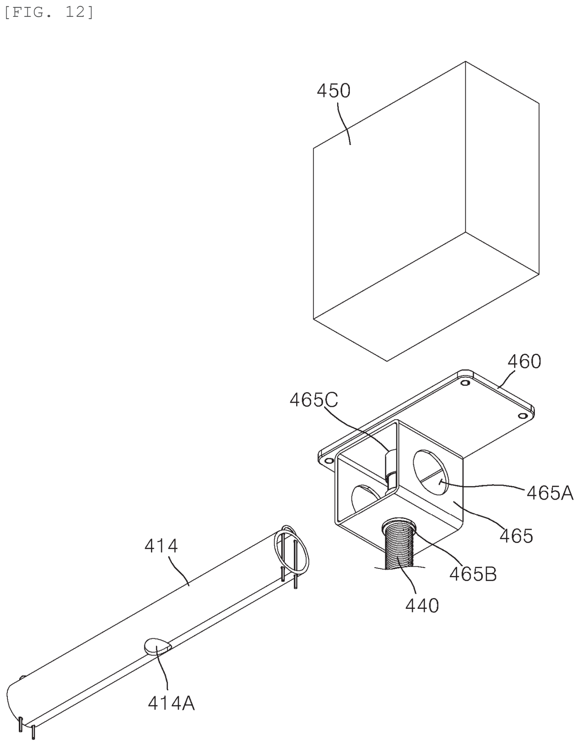

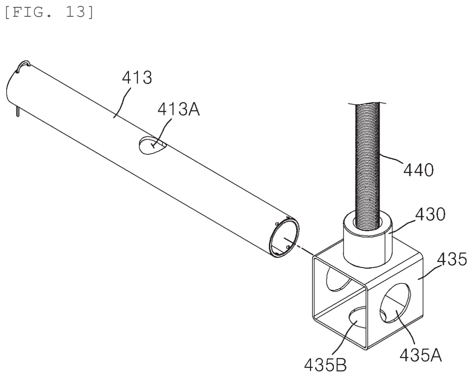

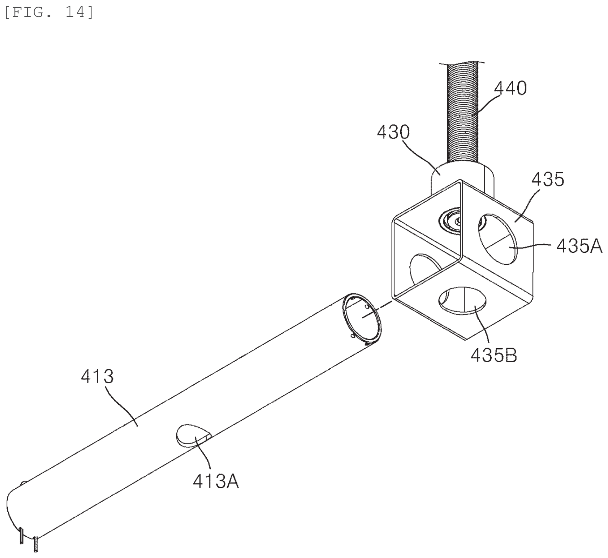

FIG. 9 is a perspective view illustrating the nut member, the screw bar, and the tilt motor illustrated in FIGS. 3 and 4. FIG. 10 is a perspective view of the bottom of FIG. 9. FIG. 11 is an exploded perspective view illustrating the upper part of FIGS. 9 and 10. FIG. 12 is a perspective view of the bottom of FIG. 11. FIG. 13 is an exploded perspective view illustrating the lower part of FIGS. 9 and 10. FIG. 14 is a perspective view of the bottom of FIG. 13.

Referring to FIGS. 9 to 14, a first combination frame 435 with a pipe shape having an empty inside may be disposed in the nut member 430. The first combination frame 435 may be combined with the lower side of the nut member 430. The first combination frame 435 may be formed in a square pipe shape having an empty inside, but may be formed in various pipe shapes including a circular pipe if the first combination frame has a structure having an empty inside.

First through holes 435A through which the third joint bar 413 passes may be formed on both sides of the first combination frame 435, respectively. Second through holes 435B through which the screw bar 440 passes may be formed on the upper and lower sides of the first combination frame 435, respectively. A third through hole 413A through which the screw bar 440 passes may be formed in the third joint bar 413. The third through hole 413A may be formed in a middle part of the left and right length of the third joint bar 413.

The tilt driving unit 400 may further include the mounting bracket 460 and a manual tilt adjustment member 445. The mounting bracket 460 may be disposed in the fourth joint bar 414. The mounting bracket 460 may be formed in a sheet shape in which a top surface and bottom surface of the mounting bracket each have a horizontal surface. The manual tilt adjustment member 445 may be rotatably disposed in the mounting bracket 460.

The manual tilt adjustment member 445 may be combined with an upper end of the screw bar 440. A worker can manually tilt the antenna unit 200 by rotating the screw bar 440 by rotating the manual tilt adjustment member 445 by using a tool, such as a spanner. In this case, the tilt motor 450 may not be provided. If the tilt motor 450 is provided, the rotation shaft of the tilt motor 450 may be combined with the manual tilt adjustment member 445.

A second combination frame 465 having a pipe shape having an empty inside may be disposed in the mounting bracket 460. The second combination frame 465 may be combined with the lower side of the mounting bracket 460. The second combination frame 465 may be formed in a square pipe shape having an empty inside, but may be formed in various pipe shapes including a circular pipe if the second combination frame has a structure having an empty inside.

Fourth through holes 465A through which the fourth joint bar 414 may be formed on both sides of the second combination frame 465, respectively. A fifth through hole 465B through which the screw bar 440 passes may be formed at the bottom of the second combination frame 465. A sixth through hole 465C through which the manual tilt adjustment member 445 passes may be formed at the top of the second combination frame 465. The upper end of the screw bar 440 and the lower end of the manual tilt adjustment member 445 may be combined through a coupler in the internal space of the second combination frame 465. A seventh through hole 414A through which the combination unit of the screw bar 440 and the manual tilt adjustment member 445 passes may be formed in the fourth joint bar 414. The seventh through hole 414A may be formed in a middle part of the left and right length of the fourth joint bar 414.

The tilt motor 450 may be mounted on the mounting bracket 460. The tilt motor 450 may be mounted on the top surface of the mounting bracket 460. When the tilt motor 450 is in the state in which the tilt motor has been mounted on the mounting bracket 460, the rotation shaft of the tilt motor 450 may be connected to the manual tilt adjustment member 445 and may rotate the screw bar 440.

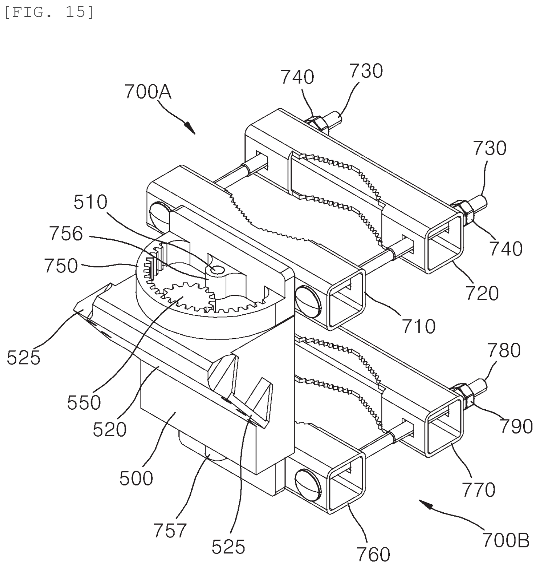

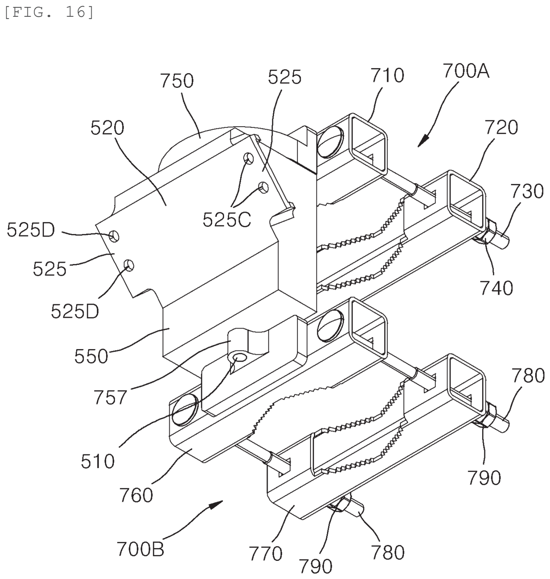

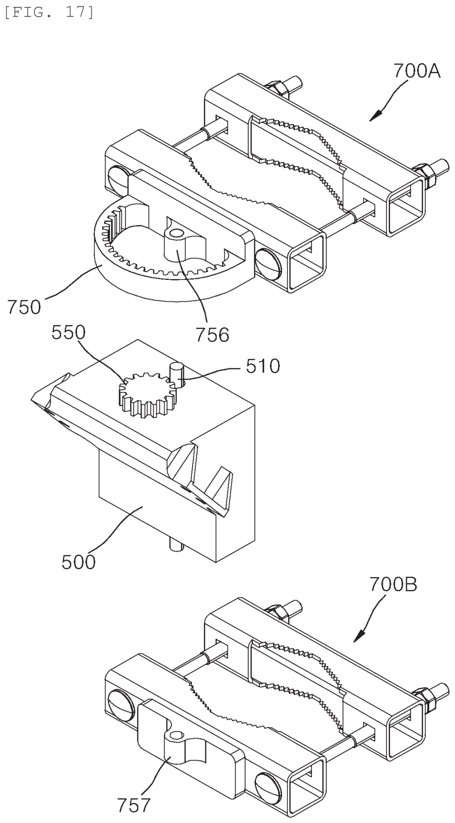

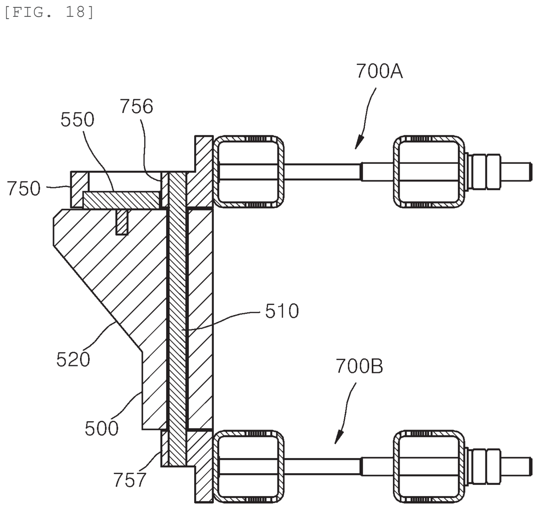

FIG. 15 is a perspective view of the front side of the rotation driving unit and the support pole mounting unit illustrated in FIG. 2. FIG. 16 is a perspective view of the bottom of FIG. 15. FIG. 17 is an exploded perspective view of FIG. 15. FIG. 18 is a lateral cross-sectional view of FIG. 15.

Referring to FIGS. 2 and 15 to 18, the rotation driving unit 500 may be rotatably combined with the support pole mounting unit 700 in the horizontal direction. The rotation driving unit 500 may be rotatably combined with the support pole mounting unit 700 in the horizontal direction, and may rotate the antenna unit 200 in the horizontal direction upon rotation in the horizontal direction.

That is, the rotation driving unit 500 may be combined with the tilt driving unit 400 and rotated in the horizontal direction along with the tilt driving unit 400 upon rotation in the horizontal direction with respect to the support pole mounting unit 700, and may rotate the tilt driving unit 400 in the horizontal direction. The antenna unit 200 may be rotated in the horizontal direction along with the tilt driving unit 400 because the antenna unit is combined with the tilt driving unit 400 and the tilt driving unit 400 is rotated in the horizontal direction by the rotation driving unit 500.

A rotation shaft 510 that is rotatably combined with the support pole mounting unit 700 may be formed to protrude on upper and lower surfaces of the rotation driving unit 500. The rotation shaft 510 may be formed as a single rotation shaft 510 that penetrates the upper and lower surfaces of the rotation driving unit 500. As the upper and lower surfaces of the rotation driving unit 500 are rotatably combined with the support pole mounting unit 700, the rotation driving unit 500 may be rotatably combined with the support pole mounting unit 700 in the horizontal direction.

An internal gear 750 may be formed in the support pole mounting unit 700. An external gear 550 that is geared with the internal gear 750 may be formed in the rotation driving unit 500. The external gear 550 may be rotated when the rotation driving unit 500 is driven and moved along the inner circumference surface of the internal gear 750, and may rotate the rotation driving unit 500 in the horizontal direction.

The internal gear 750 may be formed in an arc shape. A plurality of gear teeth may be formed in the inner circumference surface of the internal gear 750. The external gear 550 may be formed in a circular pipe. A plurality of gear teeth that is geared with the plurality of gear teeth formed in the inner circumference surface of the internal gear 750 may be formed in the outer circumference surface of the external gear 550.

The support pole mounting unit 700 may include an upper support pole mounting unit 700A and a lower support pole mounting unit 700B. The upper support pole mounting unit 700A and the lower support pole mounting unit 700B may be disposed to be spaced apart from each other up and down. An upper end of the rotation shaft 510 may be rotatably combined with a first combination protrusion 756 formed in a front surface of the upper support pole mounting unit 700A. A lower end of the rotation shaft 510 may be rotatably combined with a second combination protrusion 757 formed in a front surface of the lower support pole mounting unit 700B.

The internal gear 750 may be disposed in the front surface of the upper support pole mounting unit 700A. The first combination protrusion 756 formed in the front surface of the upper support pole mounting unit 700A may be disposed to protrude inside the internal gear 750. The external gear 550 may be disposed on the top surface of the rotation driving unit 500.

The upper support pole mounting unit 700A may include a front horizontal bracket 710, a rear horizontal bracket 720, a pair of long bolts 730, and a plurality of nuts 740. The front horizontal bracket 710 and the rear horizontal bracket 720 may be horizontally disposed. The front horizontal bracket 710 and the rear horizontal bracket 720 may be disposed lengthily left and right. The front horizontal bracket 710 and the rear horizontal bracket 720 may be disposed at the same height.

The internal gear 750 and the first combination protrusion 756 may be formed on a front surface of the front horizontal bracket 710.

The front horizontal bracket 710 and the rear horizontal bracket 720 may each be formed in a square pipe shape having an empty inside. The front horizontal bracket 710 and the rear horizontal bracket 720 may be connected by the pair of long bolts 730. The pair of long bolts 730 may be spaced apart from each other left and right, and may be disposed lengthily front and rear. The pair of long bolts 730 may be fastened to the plurality of nuts 740, respectively, may closely fix a recess portion formed in a rear surface of the front horizontal bracket 710 to a front surface of the support pole 100, and may closely fix a recess portion formed in a front surface of the rear horizontal bracket 720 to a rear surface of the support pole 100.

The lower support pole mounting unit 700B may include a front horizontal bracket 760, a rear horizontal bracket 770, a pair of long bolts 780, and a plurality of nuts 790. The front horizontal bracket 760 and the rear horizontal bracket 770 may be horizontally disposed. The front horizontal bracket 760 and the rear horizontal bracket 770 may be disposed lengthily left and right. The front horizontal bracket 760 and the rear horizontal bracket 770 may be disposed at the same height.

The second combination protrusion 757 may be formed on a front surface of the front horizontal bracket 760.

The front horizontal bracket 760 and the rear horizontal bracket 770 may each be formed in a square pipe shape having an empty inside. The front horizontal bracket 760 and the rear horizontal bracket 770 may be connected by the pair of long bolts 780. The pair of long bolts 780 may be spaced apart from each other left and right and disposed lengthily front and rear. The pair of long bolts 780 may be fastened to the plurality of nuts 790, respectively, may closely fix a recess portion formed in a rear surface of the front horizontal bracket 760 to the front surface of the support pole 100, and may closely fix a recess portion formed in a front surface of the rear horizontal bracket 770 to the rear surface of the support pole 100.

The rotation driving unit 500 may be combined with at least one of the plurality of tilt members 421, 422, 423, and 424. Specifically, the rotation driving unit 500 may be combined with a rear surface of the third tilt member 423.

A load that acts from the rotation driving unit 500 can be distributed to the first joint bar 411 and the fourth joint bar 414 because the rotation driving unit 500 is combined with the third tilt member 423. Furthermore, a load that acts from the antenna mounting unit 600 can be distributed to the second joint bar 412 and the fourth joint bar 414 because the antenna mounting unit 600 is combined with the fourth tilt member 424. Accordingly, operations of the tilt driving unit 400 and the rotation driving unit 500 can become smooth.

A combination plate 525 that is combined with a rear surface of the (3-1)-th tilt member 423A and a front surface of the (3-2)-th tilt member 423B may be formed on both sides of the rotation driving unit 500.

As described above, the combination bar 615 of the antenna mounting unit 600 may be combined with the front surface of the (4-1)-th tilt member 424A and the front surface of the (4-2)-th tilt member 424B through the plurality of bolts B1 (refer to FIG. 2). A surface of the combination bar 615 of the antenna mounting unit 600, which faces the front surface of the (4-1)-th tilt member 424A and the front surface of the (4-2)-th tilt member 424B, may be formed as the slope 616 (refer to FIGS. 2, 5, and 6).

A surface of the rotation driving unit 500, which faces the rear surface of the (3-1)-th tilt member 423A and the front surface of the (3-2)-th tilt member 423B, may be formed as a slope 520. The combination plate 525 may be formed to protrude at the same tilt as the slope 520 at both left and right ends of the slope 520 of the rotation driving unit 500.

A plurality of bolt fastening holes 525C that is fastened to the rear surface of the (3-1)-th tilt member 423A through the plurality of bolts B2 (refer to FIG. 2) may be formed in the left combination plate 525, among the combination plates 525 formed at both left and right ends of the slope 520. A plurality of bolt fastening holes 525D that is fastened to the front surface of the (3-2)-th tilt member 423B through the plurality of bolts B2 may be formed in the right combination plate 525, among the combination plates. The plurality of bolt fastening holes 525C may be formed of a pair of bolt fastening holes 525C that is spaced apart from each other along the length of the left combination plate 525. In this case, the direction of the length of the left combination plate 525 may be the same direction as the length of the (3-1)-th tilt member 423A. The plurality of bolt fastening holes 525D may be formed of a pair of bolt fastening holes 525D that is spaced apart from each other along the length of the right combination plate 525. In this case, the direction of the length of the right combination plate 525 may be the same direction as the length of the (3-2)-th tilt member 423B.

The plurality of bolt fastening holes 423C (refer to FIG. 4) that is fastened to the plurality of bolts B2 (refer to FIG. 2), respectively, may be formed in the rear surface of the (3-1)-th tilt member 423A. The plurality of bolt fastening holes 423C may be formed of a pair of bolt fastening holes 423C that is spaced apart from each other along the length of the (3-1)-th tilt member 423A. Furthermore, the plurality of bolt fastening holes 423D (refer to FIG. 4) that is fastened to the plurality of bolts B2, respectively, may be formed in the front surface of the (3-2)-th tilt member 423B. The plurality of bolt fastening holes 423D may be formed of a pair of bolt fastening holes 423D that is spaced apart from each other along the length of the (3-2)-th tilt member 423B.

Meanwhile, the slope 616 (refer to FIG. 2) formed in the combination bar 615 of the antenna mounting unit 600 is combined with the front surface of the (4-1)-th tilt member 424A and the front surface of the (4-2)-th tilt member 424B through the plurality of bolts B1 (refer to FIG. 2), but may be welded and combined therewith.

Furthermore, the combination plate 525 of the rotation driving unit 500 is combined with the rear surface of the (3-1)-th tilt member 423A and the front surface of the (3-2)-th tilt member 423B through the plurality of bolts B2 (refer to FIG. 2), but may be welded and combined therewith.

Meanwhile, the plurality of joint bars 411, 412, 413, and 414 of the tilt driving unit 400 of the aforementioned embodiment is combined with the plurality of tilt members 421, 422, 423, and 424 through the plurality of clips C1, C2, C3, and C4, but may be combined with the plurality of tilt members 421, 422, 423, and 424 through a plurality of snap rings instead of the plurality of clips C1, C2, C3, and C4. This is described below with reference to FIGS. 19 and 20.

FIG. 19 is a diagram illustrating another embodiment of the tilt driving unit illustrated in FIG. 3. FIG. 20 is an exploded view of the fourth snap ring in the fourth joint bar illustrated in FIG. 19.

Referring to FIGS. 19 and 20, after the (1-1)-th tilt member 421A, the (1-2)-th tilt member 421B, the (3-1)-th tilt member 423A, and the (3-2)-th tilt member 423B are rotatably combined with the first joint bar 411, first snap rings SR1 may be installed at both ends of the first joint bar 411, respectively. The first snap rings SR1 can prevent the first joint bar 411 from being detached from the (1-1)-th tilt member 421A, the (1-2)-th tilt member 421B, the (3-1)-th tilt member 423A, and the (3-2)-th tilt member 423B.

After the (2-1)-th tilt member 422A, the (2-2)-th tilt member 422B, the (4-1)-th tilt member 424A, and the (4-2)-th tilt member 424B are rotatably combined with the second joint bar 412, second snap rings SR2 may be installed at both ends of the second joint bar 412, respectively. The second snap rings SR2 can prevent the second joint bar 412 from being detached from the (2-1)-th tilt member 422A, the (2-2)-th tilt member 422B, the (4-1)-th tilt member 424A, and the (4-2)-th tilt member 424B.

After the (1-1)-th tilt member 421A, the (1-2)-th tilt member 421B, the (2-1)-th tilt member 422A, and the (2-2)-th tilt member 422B are rotatably combined with the third joint bar 413, third snap rings SR3 may be installed at both ends of the third joint bar 413, respectively. The third snap rings SR3 can prevent the third joint bar 413 from being detached from the (1-1)-th tilt member 421A, the (1-2)-th tilt member 421B, the (2-1)-th tilt member 422A, and the (2-2)-th tilt member 422B.

After the (3-1)-th tilt member 423A, the (3-2)-th tilt member 423B, the (4-1)-th tilt member 424A, and the (4-2)-th tilt member 424B are rotatably combined with the fourth joint bar 414, fourth snap rings SR4 may be installed at both ends of the fourth joint bar 414, respectively. The fourth snap rings SR4 can prevent the fourth joint bar 414 from being detached from the (3-1)-th tilt member 423A, the (3-2)-th tilt member 423B, the (4-1)-th tilt member 424A, and the (4-2)-th tilt member 424B.

Specifically, as referred in FIG. 20, a snap ring combination groove 417 may be formed in the outer circumference surface of the end of the fourth joint bar 414. The snap ring combination grooves 417 may be formed in the outer circumference surfaces of both ends of the fourth joint bar 414, respectively. The snap ring combination grooves 417 may be combined with the fourth snap rings SR4, and may combine the fourth joint bar 414 with the (3-1)-th tilt member 423A.

Of course, as in the fourth joint bar 414, the snap ring combination grooves 417 may also be formed in the outer circumference surfaces of both ends of each of the first joint bar 411, the second joint bar 412, and the third joint bar 413, respectively. That is, the snap ring combination grooves 417 may be formed in the outer circumference surfaces of both ends of each of the plurality of joint bars 411, 412, 413, and 414. The plurality of snap rings SR1, SR2, SR3, and SR4 may be combined with the snap ring combination grooves 417 formed in the outer circumference surfaces of both ends of the plurality of joint bars 411, 412, 413, and 414, respectively, and may combine the plurality of joint bars 411, 412, 413, and 414 with the plurality of tilt members 421, 422, 423, and 424, respectively.

The plurality of snap rings SR1, SR2, SR3, and SR4 may each be formed in various shapes, such as a C shape and an E shape.

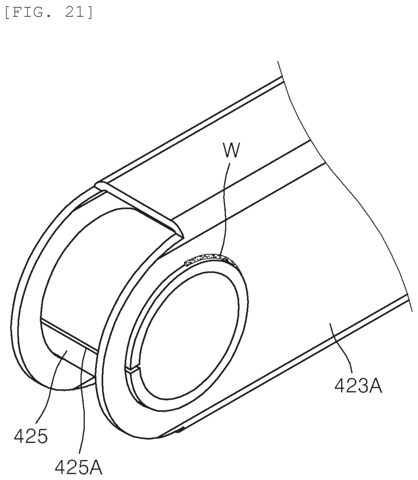

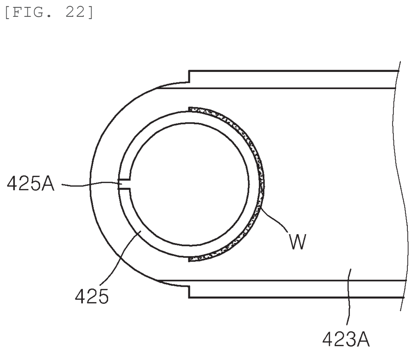

FIG. 21 is a perspective view illustrating another embodiment of the bush illustrated in FIG. 7. FIG. 22 is a side view of FIG. 21.

Referring to FIGS. 21 and 22, in the tilt driving unit 400 of the antenna apparatus 1 according to the embodiment of the present disclosure, the bushes 425 have been installed at both ends of each of the plurality of tilt members 421, 422, 423, and 424, respectively, as referred in FIG. 7. However, in another embodiment, the bush 425 may have one side incised so that an incision part 425A may be formed in the bush. At least a part of the bush 425 in a portion on the other side of the incision part 425A may be welded (W) in each of the plurality of tilt members 421, 422, 423, and 424 in an arc shape. FIG. 22 discloses the bush 425 that is welded (W) in a semicircular shape as an example of the arc shape.

Accordingly, in the bushes 425 installed at both ends of each of the plurality of tilt members 421, 422, 423, and 424, respectively, a portion that has not been welded (W) in each of the plurality of tilt members 421, 422, 423, and 424 can be elastically moved by the incision part 425A. Accordingly, a tilt operation of the tilt driving unit 400 can become smooth because the plurality of tilt members 421, 422, 423, and 424 are smoothly moved with respect to the plurality of joint bars 411, 412, 413, and 414 upon rotation.

Meanwhile, in the above embodiments, each of the plurality of tilt members 421, 422, 423, and 424 has been formed as a pair in which the tilt members have been spaced apart from each other left and right in a square pipe shape having an empty inside. That is, in the above embodiments, in the first tilt member 421, the (1-1)-th tilt member 421A having a square pipe shape having an empty inside and the (1-2)-th tilt member 421B having a square pipe shape having an empty inside have been disposed to be spaced apart from each other left and right. In the second tilt member 422, the (2-1)-th tilt member 422A having a square pipe shape having an empty inside and the (2-2)-th tilt member 422B having a square pipe shape having an empty inside have been disposed to be spaced apart from each other left and right. In the third tilt member 423, the (3-1)-th tilt member 423A having a square pipe shape having an empty inside and the (3-2)-th tilt member 423B having a square pipe shape having an empty inside have been disposed to be spaced apart from each other left and right. In the fourth tilt member 424, the (4-1)-th tilt member 424A having a square pipe shape having an empty inside and the (4-2)-th tilt member 424B having a square pipe shape having an empty inside have been disposed to be spaced apart from each other left and right.

However, the plurality of tilt members 421, 422, 423, and 424 may each be formed in a single square plate shape. That is, the first tilt member 421 may be formed in the single square plate shape. The second tilt member 422 may be formed in the single square plate shape. The third tilt member 423 may be formed in the single square plate shape. The fourth tilt member 424 may be formed in the single square plate shape.

Furthermore, in the above embodiments, the plurality of joint bars 411, 412, 413, and 414 has been formed in the circular pipe shape having an empty inside. That is, in the above embodiments, the first joint bar 411 has been formed in the circular pipe shape having an empty inside. The second joint bar 412 has been formed in the circular pipe shape having an empty inside. The third joint bar 413 has been formed in the circular pipe shape having an empty inside. The fourth joint bar 414 has been formed in the circular pipe shape having an empty inside.

However, the plurality of joint bars 411, 412, 413, and 414 may each be formed in a shaft shape not having an empty inside. That is, the first joint bar 411 may be formed in the shaft shape not having an empty inside. The second joint bar 412 may be formed in the shaft shape not having an empty inside. The third joint bar 413 may be formed in the shaft shape not having an empty inside. The fourth joint bar 414 may be formed in the shaft shape not having an empty inside.

As described above, in the antenna apparatus 1 according to an embodiment of the present disclosure, the internal gear 750 is formed in the support pole mounting unit 700. The external gear 550 is formed in the rotation driving unit 500. The external gear 550 is geared with the internal gear 750, rotated when the rotation driving unit 500 is driven, and moved along the inner circumference surface of the internal gear 750, thus rotating the rotation driving unit 500 in the horizontal direction. Accordingly, an operation of the rotation driving unit 500 can become smooth because the structure of the rotation driving unit 500 that rotates the antenna unit 200 is simplified to reduce weight.

Furthermore, in the antenna apparatus 1 according to an embodiment of the present disclosure, the plurality of joint bars 411, 412, 413, and 414 that constitutes the tilt driving unit 400 that tilts the antenna unit 200 is each formed in the pipe shape having an empty inside. Accordingly, an operation of the tilt driving unit 400 can become smooth because stiffness is sufficiently secured while reducing the weight of the tilt driving unit 400.

Furthermore, in the antenna apparatus 1 according to an embodiment of the present disclosure, a worker can manually tilt the antenna unit 200 by rotating the manual tilt adjustment member 445. As the rotation shaft of the tilt motor 450 is combined with the manual tilt adjustment member 445, the antenna unit 200 can be automatically tilted by an operation of the tilt motor 450.

Furthermore, in the antenna apparatus 1 according to an embodiment of the present disclosure, an operation of the tilt driving unit 400 can be made smooth and operation noise can also be reduced because the at least one bush 425 is combined with both ends of each of the plurality of tilt members 421, 422, 423, and 424 and the plurality of joint bars 411, 412, 413, and 414 is each rotatably combined the at least one bush 425.

Furthermore, in the antenna apparatus according to the embodiments of the present disclosure, the at least one bush 425 has one side incised, and the incision part 425A is formed in the bush. At least a part of the at least one bush 425 in a portion on the side opposite to the incision part 425A is welded to each of the plurality of tilt members 421, 422, 423, and 424 in the arc shape. Accordingly, rotation operations of the plurality of tilt members 421, 422, 423, and 424 can be smooth because the at least one bush 425 is elastically moved on the basis of the incision part 425A upon rotation operations of the plurality of tilt members 421, 422, 423, and 424.

A person having ordinary knowledge in the art to which the present disclosure pertains will understand that the present disclosure may be implemented in other detailed forms without changing the technical spirit or essential characteristics of the present disclosure. Accordingly, the aforementioned embodiments should be construed as being only illustrative, but should not be construed as being restrictive from all aspects. The scope of the present disclosure is defined by the appended claims rather than by the detailed description, and all changes or modifications derived from the meanings and scope of the claims and equivalent concepts thereof should be interpreted as being included in the scope of the present disclosure.

### [Industrial Applicability]

The present disclosure provides the antenna apparatus capable of making a smooth operation of the rotation driving unit by reducing weight by simplifying the structure of the rotation driving unit that rotates the antenna unit.

## Claims

1. An antenna apparatus comprising:
an antenna unit; and
a support pole mounting unit combined with a support pole; and
a rotation driving unit rotatably combined with the support pole mounting unit in a horizontal direction and configured to rotate the antenna unit in the horizontal direction upon rotation in the horizontal direction,
wherein an internal gear is formed in the support pole mounting unit, and
an external gear that is geared with the internal gear, rotated when the rotation driving unit is driven, moved along an inner circumference surface of the internal gear, and configured to rotate the rotation driving unit in the horizontal direction is formed in the rotation driving unit.

2. The antenna apparatus of claim 1, wherein the internal gear is formed in an arc shape.

3. The antenna apparatus of claim 1, wherein a rotation shaft rotatably combined with the support pole mounting unit is formed to protrude on upper and lower surfaces of the rotation driving unit.

4. The antenna apparatus of claim 1, further comprising a tilt driving unit comprising a plurality of tilt members that tilts the antenna unit upon rotation and a plurality of joint bars each rotatably combined with both ends of each of the plurality of tilt members,
Wherein the rotation driving unit is combined with at least one of the plurality of tilt members.

5. The antenna apparatus of claim 4, wherein the plurality of joint bars is each formed in a pipe shape having an empty inside.

6. The antenna apparatus of claim 4, wherein:
at least one bush is combined with both ends of each of the plurality of tilt members, and
the plurality of joint bars is each rotatably combined with the at least one bush.

7. The antenna apparatus of claim 4, wherein the plurality of tilt members is formed in a pipe shape having an empty inside.

8. The antenna apparatus of claim 4, further comprising a plurality of fixing fastening members that combines both ends of the plurality of joint bars with the plurality of tilt members, respectively.

9. The antenna apparatus of claim 8, wherein:
clip through holes are formed at both ends of each of the plurality of joint bars, and
the plurality of fixing fastening members comprises a plurality of clips that combines the plurality of joint bars with the plurality of tilt members, respectively, through the clip through holes formed at both ends of the plurality of joint bars.

10. The antenna apparatus of claim 8, wherein:
snap ring combination grooves are formed in outer circumference surfaces of both ends of each of the plurality of joint bars, and
the plurality of fixing fastening members comprises a plurality of snap rings that is combined with the snap ring combination grooves formed in the outer circumference surfaces of both ends of the plurality of joint bars, respectively, and that combines the plurality of joint bars with the plurality of tilt members, respectively.

11. The antenna apparatus of claim 4, wherein the plurality of joint bars comprises:
a first joint bar;
a second joint bar spaced apart forward from the first joint bar and disposed in parallel to the first joint bar;
a third joint bar spaced apart upward or downward between the first joint bar and the second joint bar and disposed in parallel to the first joint bar and the second joint bar; and
a fourth joint bar spaced apart in a direction opposite to a direction of the third joint bar between the first joint bar and the second joint bar and disposed in parallel to the first joint bar, the second joint bar, and the third joint bar.

12. The antenna apparatus of claim 11, wherein the plurality of tilt members comprises:
a first tilt member having both ends rotatably combined with the first joint bar and the third joint bar, respectively;
a second tilt member having both ends rotatably combined with the second joint bar and the third joint bar, respectively;
a third tilt member having both ends rotatably combined with the first joint bar and the fourth joint bar, respectively; and
a fourth tilt member having both ends rotatably combined with the second joint bar and the fourth joint bar, respectively.

13. The antenna apparatus of claim 12, further comprising an antenna mounting unit combined with the antenna unit,
wherein the rotation driving unit is combined with a rear surface of the third tilt member, and
the antenna mounting unit is combined with a front surface of the fourth tilt member.

14. The antenna apparatus of claim 12, wherein:
the first tilt member comprises a (1-1)-th tilt member having both ends rotatably combined with one end of the first joint bar and one end of the third joint bar, respectively, and a (1-2)-th tilt member having both ends rotatably combined with the other end of the first joint bar and the other end of the third joint bar, respectively,
the second tilt member comprises a (2-1)-th tilt member having both ends rotatably combined with one end of the second joint bar and one end of the third joint bar, respectively, and a (2-2)-th tilt member having both ends rotatably combined with the other end of the second joint bar and the other end of the third joint bar, respectively,
the third tilt member comprises a (3-1)-th tilt member having both ends rotatably combined with one end of the first joint bar and one end of the fourth joint bar, respectively, and a (3-2)-th tilt member having both ends rotatably combined with the other end of the first joint bar and the other end of the fourth joint bar, respectively, and
the fourth tilt member comprises a (4-1)-th tilt member having both ends rotatably combined with one end of the second joint bar and one end of the fourth joint bar, respectively, and a (4-2)-th tilt member having both ends rotatably combined with the other end of the second joint bar and the other end of the fourth joint bar, respectively.

15. The antenna apparatus of claim 14, wherein:
combination plates combined with a rear surface of the (3-1)-th tilt member and a rear surface of the (3-2)-th tilt member, respectively, are formed on both sides of the rotation driving unit, and
combination bars combined with a front surface of the (4-1)-th tilt member and a front surface of the (4-2)-th tilt member are formed in the antenna mounting unit.

16. The antenna apparatus of claim 15, wherein:
a surface of the rotation driving unit where the rear surface of the (3-1)-th tilt member and the rear surface of the (3-2)-th tilt member faces each other is formed as a slope,
the combination plate is formed to protrude at a tilt identical with a tilt of the slope at both ends of the slope of the rotation driving unit, and
a surface of the combination bar where a front surface of the (4-1)-th tilt member and a front surface of the (4-2)-th tilt member faces each other is formed as a slope.

17. The antenna apparatus of claim 15, wherein the combination bar is formed in a pipe shape having an empty inside.

18. The antenna apparatus of claim 11, wherein the tilt driving unit further comprises:
a nut member disposed in any one joint bar of the third joint bar and the fourth joint bar; and
a screw bar vertically fastened to the nut member and configured to tilt the antenna unit by rotating the first tilt member, the second tilt member, the third tilt member, and the fourth tilt member upon rotation.

19. The antenna apparatus of claim 18, wherein:
first through holes through which the any one joint bar passes are formed on both sides of the nut member, respectively,
a first combination frame with a pipe shape having an empty inside in which second through holes through which the screw bar passes are formed on upper and lower sides thereof, respectively, is disposed in the nut member, and
a third through hole through which the screw bar passes is formed in the any one joint bar.

20. The antenna apparatus of claim 18, wherein the tilt driving unit further comprises:
a mounting bracket is disposed in the other joint bar of the third joint bar and the fourth joint bar, and
a manual tilt adjustment member rotatably disposed in the mounting bracket and combined with one end of the screw bar.
